(19) 

**Europäisches Patentamt**
**European Patent Office**
**Office européen des brevets**

(11) **EP 1 506 682 B1**

(12) **EUROPEAN PATENT SPECIFICATION**

(45) Date of publication and mention
of the grant of the patent:
**05.09.2007 Bulletin 2007/36**

(51) Int Cl.:
*H04Q 7/38* *(2006.01)* *H04Q 11/04* *(2006.01)*
*H04B 7/02* *(2006.01)*

(21) Application number: **02738431.2**

(86) International application number:
**PCT/IB2002/002217**

(22) Date of filing: **14.06.2002**

(87) International publication number:
**WO 2003/096734 (20.11.2003 Gazette 2003/47)**

(54) **METHOD AND NETWORK NODE FOR SELECTING A COMBINING POINT**

VERFAHREN UND NETZWERKKNOTEN ZUR AUSWAHL EINES KOMBINATIONSKNOTENS

PROCEDE ET NOEUD DE RESEAU POUR CHOISIR UN POINT DE COMBINAISON

(84) Designated Contracting States:
**AT BE CH CY DE DK ES FI FR GB GR IE IT LI LU MC NL PT SE TR**

(30) Priority: **08.05.2002 WOPCT/IB02/01606**

(43) Date of publication of application:
**16.02.2005 Bulletin 2005/07**

(73) Proprietor: **Nokia Corporation**
**02150 Espoo (FI)**

(72) Inventors:
• **TANG, Haitao**
**FIN-00300 Helsinki (FI)**

• **LAKKAKORPI, Jani**
**FIN-00200 Helsinki (FI)**

(74) Representative: **Eisenführ, Speiser & Partner**
**Patentanwälte Rechtsanwälte,**
**Postfach 31 02 60**
**80102 München (DE)**

(56) References cited:
**WO-A-02/30144** **WO-A-99/41850**
**US-B1- 6 198 737** **US-B1- 6 256 297**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to a method and network node for selecting a combining point, e.g. a Macro Diversity Combining (MDC) point, at which at least two redundant transmission paths are combined to a single transmission path in a transmission network, such as a radio access network (RAN) providing access to an Internet Protocol (IP) based network architecture, comprising at least two selectable combining points.

BACKGROUND OF THE INVENTION

In a Code Division Multiple Access (CDMA) based cellular network all users in the same cell or in different cells may share the same frequency spectrum simultaneously. In spread spectrum transmission, the interference tolerance enables universal frequency reuse. This enables new functions such as soft handover, but also causes strict requirements on power control. Due to the universal frequency reuse, the connection of a radio terminal, e.g. a mobile terminal, mobile station or user equipment to the cellular network can include several radio links. When the radio terminal is connected through more than one radio link, it is said to be in soft handover. If, in particular, the radio terminal has more than one radio link to two cells on the same side, it is in softer handover. Soft handover is a form of diversity, increasing the signal-to-noise ratio when the transmission power is constant. At network level, soft handover smoothes the movement of a mobile terminal from one cell to another. It helps to minimize the transmission power needed in both uplink and downlink.
Thus, a radio terminal of a network subscriber can transmit the same information on a plurality of redundant transmission parts that are set up parallel via a radio transmission interface from the cellular network to the radio terminal or from the radio terminal to the cellular network in order to achieve an optimal transmission quality. Such a transmission structure is called macro diversity. The redundant transmission paths can be dynamically setup and cleared down while the radio terminal changes its location. The information sent out by the radio terminal in the transmission frames on various transmission paths can be merged in the transmission network at combination points at which respectively two transmission paths are combined into a single transmission path in one transmission direction (uplink) and the single transmission path is divided into two transmission paths in the other transmission direction (downlink). A corresponding network architecture is described for example in the US 6,198,737 B1.
In order to obtain the most efficient RAN architecture, which is based on using advantageous characteristics of IP, some functionality is relocated between network elements. According to a recent new RAN architecture, a network element known as Base Station Controller (BSC) or Radio Network Controller (RNC) is no longer required, although this functionality must remain in the RAN architecture. Therefore, the location of a combining point, e.g. MDC point, can no longer be centralized for all base stations in the RAN. Consequently, some RNC functionality has been transferred to the base stations in order to enable soft handover and associated signaling to happen along the shortest path, producing minimum delay and signaling load to those paths of the network where this is not necessary. This new RAN architecture is described e.g. in the White Paper "IP-RAN, IP - the future of mobility", Nokia Networks, 2000.
In such a new RAN architecture, the MDC point can be selected dynamically e.g. by a serving base station instead of having this functionality in one pre-selected point like the RNC in the conventional RAN architecture or in the base station that initiates the call. In the new RAN architecture, base stations are able to act as MDC points. However, it should be possible to limit this set in order to reduce the number of MDC point relocations, which introduce additional delay, i.e., only some base stations can act as MDC points if needed. Those base stations are called MDC-capable base stations or simply MDC-capable BTSs.
However, if the first common upstream base station, i.e. the base station closest to the radio network gateway on the common path from a serving base station towards any drift base station, is always selected as the MDC point for the base stations that participate in soft handover, the processing load of the MDC point might be too high and network resources are not optimized. Moreover, it might be desired to perform link load balancing by selecting a more appropriate base station as the MDC point

SUMMARY OF THE INVENTION

It is therefore an object of the present invention to provide a method and network node for selecting a combining point in a transmission network, by means of which the load at the combining point can be reduced and a more efficient network utilization can be achieved.
This object is achieved by a method of selecting a combining point at which at least two redundant transmission paths are combined to a single transmission path in a transmission network comprising at least two selectable combining points, said method comprising the steps of:

using at least two measurement-based selection criteria for selecting said combining point;
allocating different priorities to said at least two selection criteria; and
using the selection result of a selection criterion with a higher priority as a constraint for a selection based on a selection criterion with a lower priority.

Furthermore, the above object is achieved by a network node for selecting a combining point at which at least two redundant transmission paths are combined to a single transmission path in a transmission network comprising at least two selectable combining points, said network node being arranged to use at least two measurement-based selection criteria with different priorities for selecting said combining point, and to use the selection result of a higher priority selection criterion as a constraint for a selection based on a lower priority selection criterion.

Accordingly, the combining point location is optimized based on a goal functionality, e.g. a preemptive method, which works in such a fashion that an optimal solution to a highest priority goal is searched and this solution is added as a new constraint for lower priority goals. If the solution for a higher priority goal leads to a single combining point, lower priority goals may not have to be considered. Such a preemptive method is advantageous in that it always results in an optimum value for the highest priority goal. Moreover, only a decision regarding the priority order of the available different goals is required, while no weights have to be determined. Thereby, lower delays for MDC traffic and a more efficient network utilization can be obtained due to the optimized location of the combining point.

Preferably, the at least two selection criteria comprise a selection criterion applied to measured lengths or loads of the at least two redundant transmission paths and/or the single transmission path. Furthermore, the at least two selection criteria may comprise a selection criterion applied to measured processing loads of the selectable combining points. In particular, the at least two selection criteria may comprise a first criterion of minimizing the maximum length of the at least two redundant transmission paths, a second criterion of minimizing the maximum total length of the at least two redundant transmission paths and the single transmission path, a third criterion of minimizing the maximum traffic load on the at least two redundant transmission paths and the single transmission path, and a fourth criterion of minimizing the processing load of the combining point. The maximum length and maximum total length may be determined by counting hops of said single and redundant transmission paths, respectively. Furthermore, the highest priority may be allocated to the first criterion, the second highest priority to the second criterion, the third highest priority to the third criterion, and the lowest priority to the fourth criterion. The third criterion may be applied by monitoring and updating real time traffic loads using an averaging function, e.g. an exponential averaging function.

Thus, the role of load measurements, used for measuring both link loads and combining point processing loads, is emphasized in selecting the optimal combining point. This provides the advantage that both link loads and combining processing loads can be balanced by selecting the optimal combining point.

The load measurements results may be transmitted mutually between the at least two selectable combining points at predetermined intervals. Alternatively, the load measurement results or load reports may be transmitted from the at least two selectable combining points to a centralized resource , which will distribute the load information to all possible combining points at predetermined intervals. As a further alternative, the load reports may be transmitted from the at least two selectable combining points directly to all other possible combining points at predetermined intervals without any intervention of a centralized resource. In this connection, load measurement results refers to ‚raw data" from router statistics while load report contains already processed information.

Furthermore, maximum load thresholds may be set to be considered during the selection of the combining point. The maximum real time load threshold may define the maximum allowable real time load on used links of the at least two redundant transmission paths and other (class x) load thresholds may define the maximum allowable load for different traffic types (e.g., streaming) on the single transmission path. Furthermore, a maximum load threshold may be provided for defining the maximum allowable processing load in the selected combining point.

A selection criterion may be bypassed if the required measurement values are not available.

If the selection method does not lead to a selection of a combining point, a redundant transmission path may be dropped from the at least two redundant transmission paths. Finally, if only one redundant transmission path is left and the method still does not lead to a selection of a combining point, the corresponding call may invoke one of some not yet mandated actions. For example, the possible actions may be (1) using the remaining base station in the active set of the on-going call as the new serving BTS or (2) keeping the current MDC point of the on-going call unchanged or (3) rejecting the new call (new call means that connection hasn't been set up yet) as a whole.

The selection method may be used after a change of the network topology.

The combining point may be an MDC point, if the selection method is used in a universal radio access network for providing access to an IP-based network. In this case, the selectable combining points may be base station devices. The network node for performing the selection method may be e.g. a base station device or centralized resource managing device.

Additionally, a combining point validity checking functionality may be applied, wherein a previously selected combining point is maintained if the previously selected combining point at least still meets the at least two measurement-based selection criteria. The checking functionality can be modified such that at least one stricter selection criterion is applied to the previously selected combining point. As an example, the at least one stricter selection criterion may correspond to 90% of a load threshold value applied to the previously selected combining point.

Furthermore, a fallback scheme of MDC selection on topology information inconsistency may be provided at or for an MDC module, wherein a topology inconsistency is detected, and relocations of the combining point are prevented during the detected topology inconsistency. In this case, e.g. a timer function may be started in response to the detection, and relocations are then allowed again after the expiry of the timer function.

A subset of nodes capable of being selected as the combining point in the selection step may be determined e.g. based on the topology of said transmission network. This determination may be repeated after a network topology change. The subset of capable nodes may be selected based on their number of links connecting to other nodes, e.g., those nodes having a predetermined number of links, e.g. two links, or more are selected.

BRIEF DESCRIPTION OF THE DRAWINGS

In the following, the present invention will be described in greater detail based on a preferred embodiment with reference to the accompanying drawings, in which:

Fig. 1 shows a schematic diagram of a radio access network topology in which the present invention can be implemented;

Fig. 2 shows a flow diagram indicating a selection method according to the preferred embodiment of the present invention;

Fig. 3 shows an algorithm for a first selection criterion according to the preferred embodiment;

Fig. 4 shows an algorithm for a second selection criterion according to the preferred embodiment;

Fig. 5 shows an algorithm for a third selection criterion according to the preferred embodiment;

Fig. 6 shows an algorithm for a fourth selection criterion according to the preferred embodiment;

Fig. 7 shows a table indicating combining processing loads and real time traffic loads according to a specific implementation example;

Fig. 8 shows an algorithm for a validity checking function;

Fig. 9 shows an enhancement of the flow diagram in Fig. 2 to incorporate the validity checking function;

Fig. 10 shows a specific example for the algorithm of Fig. 9;

Fig. 11 shows an algorithm for detecting a topology information inconsistency;

Fig. 12 shows an algorithm for a topology information inconsistency fallback sub-scheme;

Fig. 13 shows an example of a first RAN topology with a topology aggregation scheme; and

Fig. 14 shows an example of a second RAN topology with topology aggregation scheme.

DESCRIPTION OF THE PREFERRED EMBODIMENT

The preferred embodiment will now be described on the basis of a new RAN network architecture for providing access to an IP network.

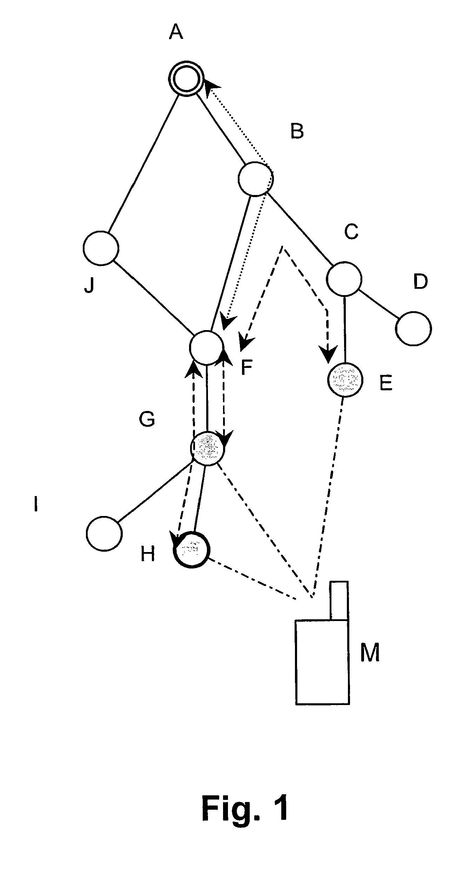

According to Fig. 1, a mobile terminal M is connected to a RAN via three redundant transmission paths indicated by respective dash-dot lines. The RAN architecture comprises a plurality of network nodes A to J, wherein the shaded nodes E, G and H are currently connected to the mobile terminal M via the redundant transmission paths. In particular, the network node H indicated with the bold circle is used as the serving base station, i.e. the base station terminating the core network interfaces data stream, and performing Radio Resource Management (RRM) functions like scheduling, power control and the like. In contrast thereto, the other shaded base stations G and E are used as drift base stations providing only resources and radio L1 layer functions for the respective connections to the mobile terminal M.

In the RAN topology shown in Fig. 1, contrary to conventional RANs, most of the functions of the former centralize controller (RNC or BSC) are moved to the base stations. In particular, all radio interface protocols are terminated in the base stations. Entities outside the base stations are needed to perform common configuration and some radio resource functions, or interworking with legacy, gateways to a core network, etc. An interface is needed between the base stations, supporting both control plane signaling and user plane traffic. Full connectivity among the entities may be supported over an IPv6 (Internet Protocol version 6) transport network. The network node A indicated by a double circular line corresponds to a RAN Gateway (RNGW), which is the IP user plane access point from the IP-based core network or other RAN to the present RAN. During a radio access bearer assignment method, the RAN returns to the core network transport addresses owned by the RNGW A where the user plane shall be terminated. Additionally, packet-switched and circuit-switched interfaces are connected through the RNGW A. The main function of the RNGW A is a micro-mobility anchor function, i.e. the user plane switching during the relocation/handover of base stations, in order to hide the mobility to the IP-based core network. Due to this function, the RNGW A does not need to perform any radio network layer processing on the user data, but relays data between the RAN and IP tunnels of the IP-based core network. Thus, the RNGW A is responsible for the association between RAN tunnels and core network tunnels, setup and release of tunnel endpoints, user plane traffic switching, packet relaying, mapping between tunnel endpoint IDs, and firewall/ security functions. It is noted that several RNGWs may be provided in the RAN to guarantee a flexible relationship between the RNGWs and the base stations.

In the situation shown in Fig. 1, the network node F has been selected as the MDC point for the connections to the mobile terminal M. The dashed arrows indicate the MDC legs between the serving and drift base stations H, G and E and the MDC point F. Furthermore, the dotted arrow between the MDC point F and the RNGW A indicates the single transmission path to which the redundant transmission paths are combined. Thus, the term "MDC leg" refers to the path from the MDC point F to one of the drift and serving base stations H, G and E.

According to the preferred embodiment, a measurement-based method is provided for selecting the most appropriate MDC point among the network nodes, e.g. base stations B to J in the IP-based RAN. To achieve this, the MDC point location is optimized using a goal programming e.g. by first minimizing the maximum MDC leg length, then minimizing the total hop count of MDC legs and the paths from the RNGW A to the MDC point, then minimizing the maximum real time traffic load on used links, and finally minimizing the MDC processing load at the potential MDC point.

It is noted that the term "real time traffic" refers to packets marked with certain differentiated services code points, e.g. Expedited Forwarding (EF) which indicates a high priority Per-Hop Behavior (PHB) to achieve a high-quality virtual circuit service. The term "hop" is used to denote a path between two network nodes, that does not have any significant effect on the characteristics of traffic flows. Thus, a connection path between two neighbor network nodes in Fig. 1 corresponds to one hop. The PHB is an externally observable forwarding treatment of an aggregate traffic stream in a network node.

Real time traffic loads on all links are monitored and updated by using exponential averaging according to the following equation:

$$rt\_load_i = (1-w)*rt\_load_{i-1} + w*(rt\_bits/(p*link\_bw)), \qquad (1)$$

wherein $rt\_bits$ denotes the number of real time bits sent on an output link, $link\_bw$ denotes the output link bandwidth, which may be both obtained from router statistics, w denotes an exponential averaging weight, and $p$ denotes a measurement period. An appropriate value for $p$ could be e.g. 500 ms. The value for w depends on the desired reaction time to changes in link loads, e.g. w = 0.5. A similar averaging mechanism may be applied to all other relevant link loads.

Furthermore, the ratio of on-going MDC connections and the maximum number of MDC connections could be monitored for every base station. The corresponding threshold values may vary considerably between different base stations. E.g., star points should be able to handle more MDC connections than a base station at the end of a chain. Here, instantaneous values could be used instead of the above exponential averaging.

The number of MDC connections running in a particular base station and traffic load information on all links directly attached to this particular base station may be transmitted periodically, e.g. every $p$ ms, as measurement results to other base stations. To avoid excessive traffic, a multicasting-like approach (e.g., Spanning Tree based algorithm) could be used. Furthermore, the value of the parameter $p$ could be increased if the number of base stations is increased in the RAN architecture.

Alternatively, if a centralized IP Transport Resource Manager (ITRM) or bandwidth broker is provided, each base station could send its measurement results to the ITRM only. The ITRM (not shown in Fig. 1) would then use a multicast-like approach to periodically distribute "aggregate" load reports to all MDC-capable base stations If a centralized resource is not used for the load reports distribution, any BTS in RAN then sends its load report directly to all other MDC-capable BTSs at predetermined intervals, where a multicasting-like approach may be used for the sending. In any way, the messages containing the measurement results or load reports should be given a high priority in terms of packet delay and loss, e.g. by marking them with an appropriate differentiated services code point (e.g. EF).

Furthermore, it is assumed that all network nodes of the RAN network have a "helicopter view" of the network topology. This can be achieved, for example by using OSPF (Open Shortest Path First) routing protocol, as described in John T. Moy, "OSPF: Anatomy of an Internet Routing Protocol, 3rd printing, September 1998, ISBN 0-201-63472-4. In this respect, it will be noted that only a single (shortest) path is in use between two network nodes if basic OSPF is used. Nevertheless, load balancing can be performed by choosing an appropriate MDC point.

The following priority order may be given to the above goals or selection criteria for selecting the appropriate MDC point. The highest priority may be allocated to the goal of minimizing the maximum MDC leg length. The second highest priority may be allocated to the goal of minimizing the total hop count of MDC legs and the paths from the RNGW A to the MDC point. The third highest priority may be allocated to the goal of minimizing the maximum real time traffic load on used links. Finally, the lowest priority may be allocated to the goal of minimizing of the MDC processing load, e.g. the number of on-going connections divided by some predetermined threshold value.

Additionally, at least one of the following general constraints may be set. The maximum real time traffic load on MDC legs *(max_rt_load)* should be less or equal than a real time threshold value (*rt_ threshold*). Maximum class x (traffic class of packets sent from RNGW; can be real time as well) traffic load on the path between RNGW and MDC point candidate *(max_x_load)* should be less or equal than a class x threshold value *(x_threshold)*. Furthermore, the MDC processing load in the MDC point candidate *(mdc_load)* should be less than MDC threshold value *(mdc_threshold)*.

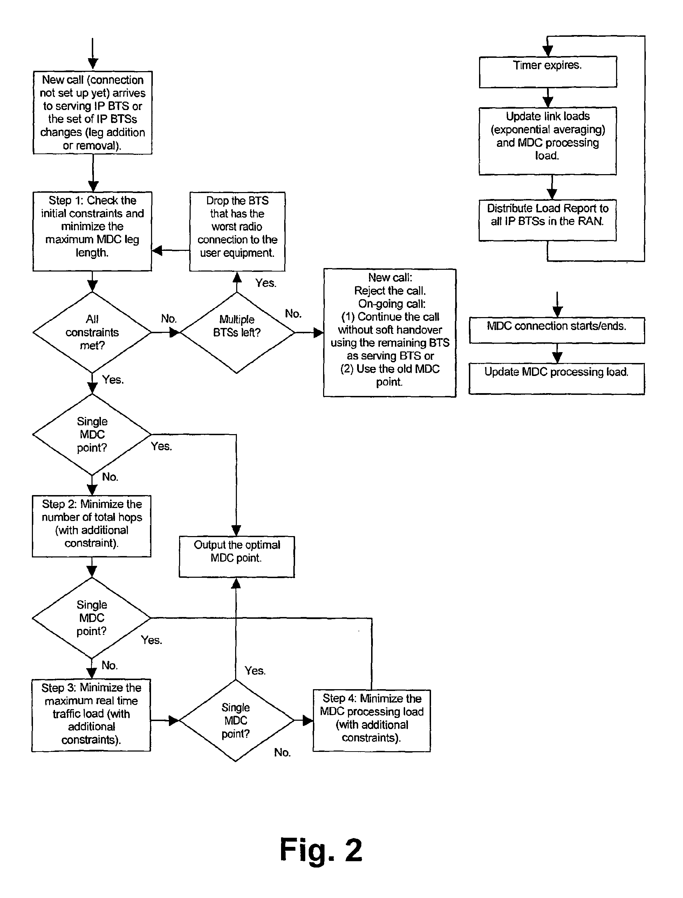

Fig. 2 shows a flow diagram indicating an implementation of the selection processing according to the preferred embodiment, in which the above goals and parameters are used. Furthermore, in the following the running variable N denotes the number of MDC point candidates, e.g. base stations in the RAN architecture, and the running variable M denotes the number of drift base stations participating in a particular soft handover situation.

The separate flow diagram on the upper right portion of Fig. 2 indicates a method for distributing individual measurement results obtained at the base stations either to the other base stations in the RAN or to the central ITRM node (not shown in Fiq. 2), after an exponential averaging with a weight parameter w has been applied to the measured link loads, and a timer has expired. Furthermore, another separate flow diagram is indicated below the above described separate diagram, wherein this lower flow diagram indicates a processing for updating the MDC processing load in the MDC point candidates whenever a new MDC connection starts or a MDC connection is dropped. These two partial or sub-methods are continuously performed in the background or in parallel to the following main selection method starting at the upper left side of Fig. 2.

When a request for a new call or some other trigger arrives at a serving base station (IP BTS), the first selection criterion is applied in step 1, wherein the maximum MDC length is minimized. Then, the selection result is compared to the general constraints, e.g. real time threshold, class x threshold and/or MDC threshold. If these constraints are not met, it is checked whether multiple base stations are left. If so, the base station with the worst radio connection to mobile phone is dropped and the selection method based on the first criterion with the highest priority is repeated. If a single base station is left and the constraints are still not met, the call is rejected - if it is a new call. In the case of an on-going call, we continue the call without soft handover (keeping its current MDC point unchanged or with the remaining BTS acting as serving BTS).

If general constraints are met, it is checked whether a single MDC point has been obtained by the first selection operation. If so, this single MDC point is output as the best or appropriate MDC point. If not, the second selection criterion with the second highest priority is applied in step 2 using the additional constraint or result of the selection in step 1.

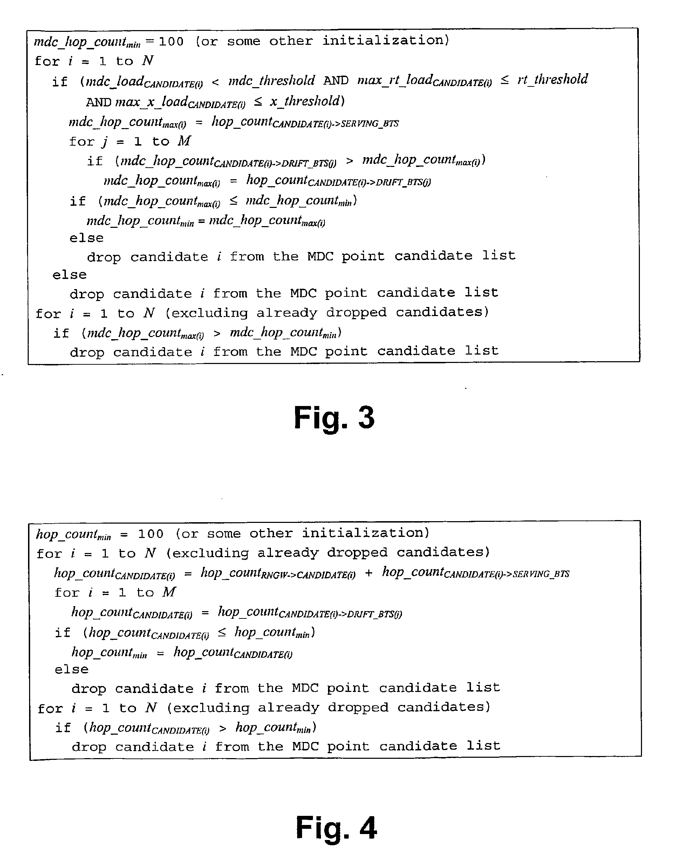

Fig. 3 shows an example for an algorithm corresponding to the highest priority selection criterion in step 1. Initially, minimum and maximum MDC hop counts are set, e.g. 100. Then, it is checked for every MDC point candidate, whether the MDC threshold, class x threshold and the real time threshold constraints are met. If so, the maximum hop count is set to the hop count of the path between the candidate and the serving base station, i.e. the length of the redundant transmission path. Then, it is checked for all drift base stations, whether the hop count between the candidate and the drift base station is larger than the set maximum hop count. If so, the maximum hop count is set to the hop count between the candidate and the drift base station. If the resulting maximum hop count is smaller or equal than the set minimum hop count, the minimum hop count is set to the obtained maximum hop count. If the obtained maximum hop count is larger than the set minimum hop count, the candidate is dropped from the MDC point candidate list. Furthermore, if the initial threshold constraints are not met for the actual candidate, it is also dropped from the MDC point candidate list.

In step 2 of Fig. 2, the number of total hops of the MDC candidates obtained from the first criterion in step 1 is minimized. If a single MDC point is obtained as the result of the second criterion, it is output as the best or appropriate MDC point.

Fig. 4 shows an algorithm as an example of the selection method according to the second criterion with the second highest priority. Initially, a minimum hop count is set to a predetermined value, e.g. 100. Then, a total hop count of all paths between the candidate and the serving and drift base stations and between the RNGW A and the candidate is determined for each remaining candidate and compared to the minimum hop count. If the obtained hop count of a candidate is smaller or equal than the minimum hop count, the minimum hop count is set to the hop count of the candidate. If not, the candidate is dropped from the list of remaining MDC point candidates.

In step 3 of Fig. 2, the third criterion with the third highest priority is applied by minimizing the maximum real time traffic load for the MDC point candidates obtained from step 2. If the result of step 3 leads to a single MDC point, this single MDC point is output as the best or appropriate MDC point. If not, the fourth criterion with the lowest priority is applied in step 4.

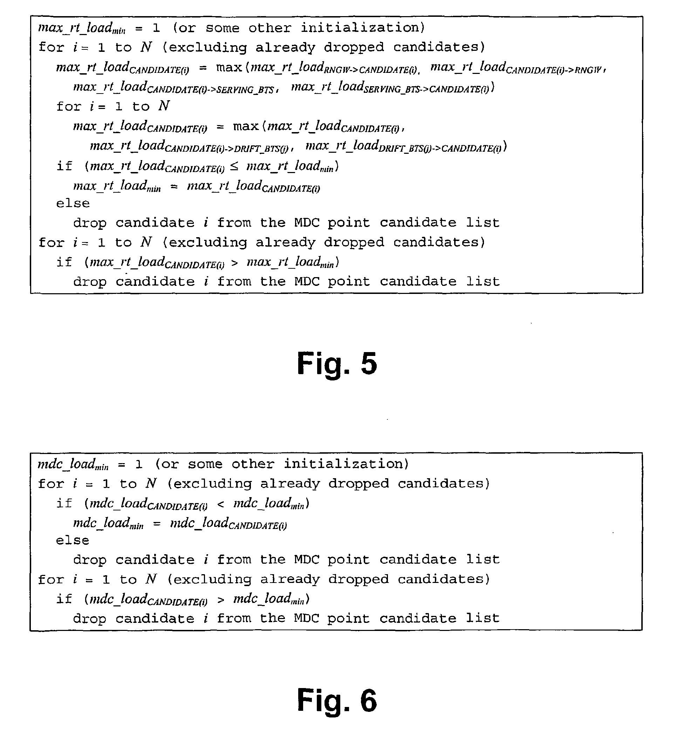

Fig. 5 shows an example of an algorithm, which may be used in step 3. Initially, a minimum value for the maximum load is set to a predetermined value, e.g. 1. Then, for every remaining MDC point candidate of the list, a maximum load value is obtained by calculating the maximum of the real time loads in both directions for all redundant transmission paths between the serving and drift base stations and the candidate and for the single transmission path between the candidate and the RNGW A. If the obtained maximum real time load value of the candidate is smaller or equal than the set minimum load value, the minimum load value is set to the obtained maximum real time load value of the candidate. If not, the candidate is dropped from the MDC point candidate list.

In step 4 of Fig. 2, the fourth criterion with the lowest priority is finally applied by minimizing the MDC processing load for all remaining MDC point candidates.

Fig. 6 shows an example of an algorithm, which can be used in step 4. Initially, a minimum MDC load is set to a predetermined value, e.g. 1. Then, for every remaining candidate in the MDC point candidate list, it is checked whether the MDC load of the candidate is smaller than the set minimum MDC load. If so, the minimum MDC load is set to the MDC load of the candidate. If not, the candidate is dropped from the MDC point candidate list.

If the result of step 4 in Fig. 2 indicates a single MDC point, this single MDC point is output as the best or appropriate MDC point. If not, a single MDC point may be randomly selected among the final remaining candidates on the MDC point candidate list, and output as the best or appropriate MDC point.

Thus, a goal based selection method for obtaining a single appropriate MDC point is provided which can be used at any initialization of a new call.

In case of any missing information, e.g. link loads or the like, the corresponding selection step requiring the missing information can be bypassed. If topology information is missing at the network node where the MDC point selection is performed, the serving base station can be used as the MDC point. However, any other selection is possible, of course.

The proposed MDC point selection method may as well be applied or initiated in cases where the network topology or the set of serving and drift base station has changed.

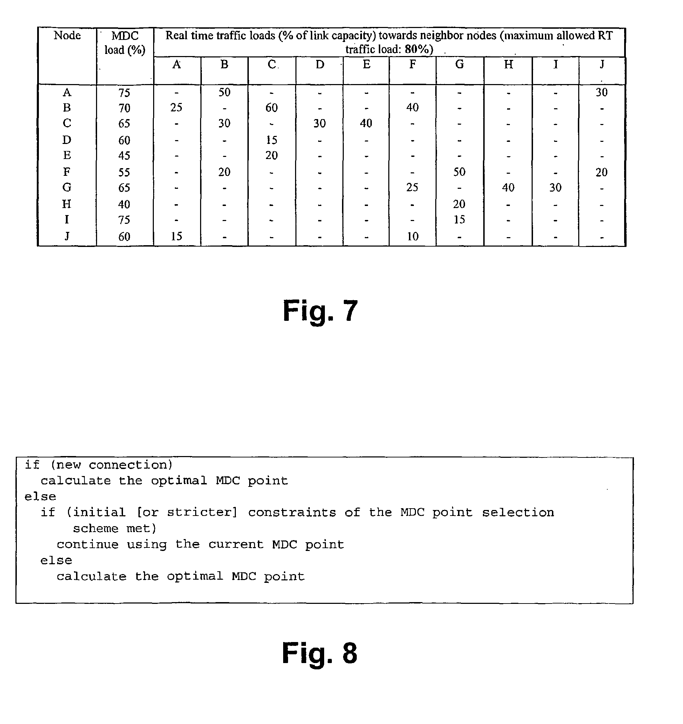

Fig. 7 shows a table indicating an example of measured real time traffic loads (percentage of link capacity) towards neighbor nodes, wherein a maximum or real time traffic load may be set to 80% (in this example, all traffic is real time traffic). Furthermore, the table in Fig. 7 shows respective MDC loads of each network nodes shown in the architecture of Fig. 1. In particular, the table of Fig. 7 presents measurement information to be used in addition to the network topology information, which each base station B to J has available for applying the selection criteria for selecting the MDC point.

In the following, the above described selection method is applied using the topology of Fig. 1 and the measurement results of Fig. 7.

In the first criterion according to Fig. 3, the minimum value of the maximum MDC leg length will finally be set to three hops. Thus the nodes B and F will be the remaining MDC point candidates in the candidate list. Only these two network nodes satisfy the criteria that the maximum length of the MDC legs is not higher than the minimum value, i.e. three hops.

Then, the second criterion according to the algorithm in Fig. 4 leads to eight hops as the minimum value of the total hop count. Still, both network nodes B and F satisfy this second criterion and thus remain on the candidate list. Accordingly, the result of the topology-based first and second selection criteria leads to a candidate list comprising the network nodes B and F.

As regards the third criterion according to Fig. 5, the maximum real time load is 60% obtained on the link from node B to node C. However, this link is comprised in the transmission paths of both MDC point candidates. Thus, still both candidates remain on the candidate list.

According to the final fourth criterion, the individual MDC processing loads of the remaining MDC point candidates are compared, wherein the MDC processing load of the candidate node F (55%) is substantially lower than the MDC processing load of the candidate node B (70%). Thus, step 4 in Fig. 2 leads to a single MDC point, i.e. network node F, which will be output as the best MDC point. This result corresponds to the situation shown in Fig. 1.

Due to the fact that the suggested selection method leads to an optimized MDC point with minimized load values and link lengths, lower delays for MDC traffic and more efficient network utilization can be achieved. Furthermore, the method is simple enough to be implemented within the base stations. However, in case the required scalability leads to a problem in bigger RAN topologies, multicast-like transmission should be provided. Additionally, a scheme suitable to distribute the measurement results either through a centralized resource or in a distributed manner among the network nodes is needed if e.g. traffic loads or MDC processing loads are used in the MDC point selection process.

However, the method and system for finding an optimized MDC point location, as proposed above, might lead to an excessive amount of MDC relocations, which is not desirable. Moreover, heavy calculations are required in connection with each MDC relocation. To alleviate this problem, a validity checking functionality can be introduced to reduce the number of MDC relocations in the RAN. According to the validity checking functionality, the MDC point or functionality will not be moved or relocated to a possibly better location, if the current MDC point is still valid, i.e., if the initial or slightly stricter constraints are still met. For example, the set maximum load threshold could be slightly reduced.

Thereby, the amount of MDC point calculations and relocations can be reduced to those cases where the location of the current MDC point no longer meets the preset constraints.

The validity checking functionality can be activated each time there is a change in the active set of base stations. When the MDC point calculation is triggered, the MDC point validity checking functionality will first check whether or not the current MDC point meets the constraints. If the answer is yes, no further calculations are done and the MDC functionality is not relocated - even though the active set of base stations would need to be updated. In logical terms, the validity checking functionality can be expressed as indicated in Fig. 8. It is noted that the way how the constraints (initial or stricter) are checked depends on the used MDC point selection method.

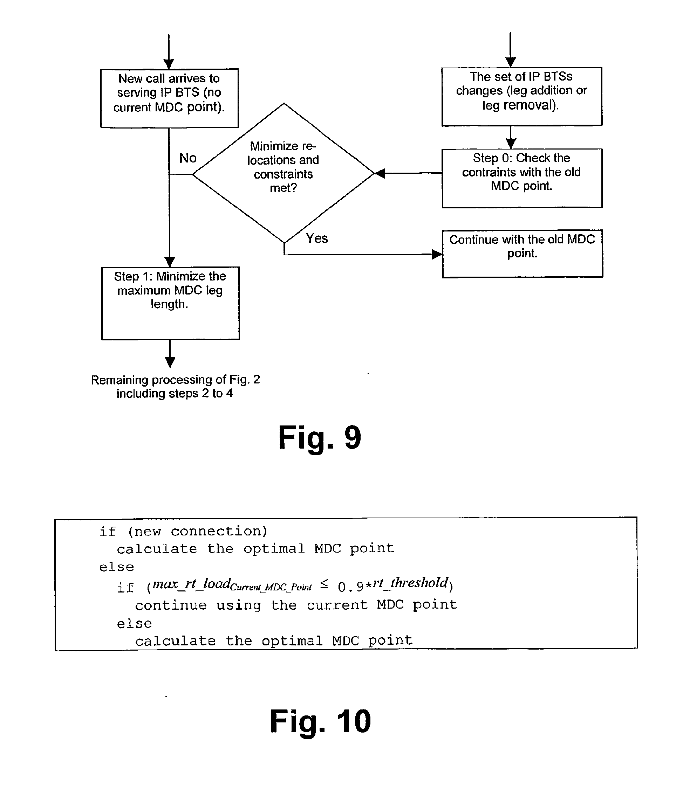

Fig. 9 shows a corresponding enhancement of the flow diagram of Fig. 2, to incorporate the above validity checking functionality. In particular, the validity checking functionality is incorporated in step 0 and the subsequent conditional branch operation, which are only performed if the set of base stations, e.g. IP BTSs, has changed.

Fig. 10 shows a specific example of the logical expression of Fig. 8, wherein a slightly stricter constraint, i.e. 90% of load threshold, is applied to the current MDC point. Of course, any other percentage can be applied to implement a lower threshold and thus a stricter constraint. Furthermore, stricter threshold values may as well be applied to one or all other MDC point selection constraints.

In the example of Fig. 7, it is now assumed that node G corresponds to the current MDC point which had been selected previously. With the above additional validity checking functionality, this current or old MDC point (node G) would be selected again or maintained, instead of node F, in the example of Fig. 7, because the constraints were still met. However, in this case, only a simple check of the load value in the MDC load column of the table of Fig. 7 was required. Hence, in addition to dramatically reducing the number of MDC relocations, the proposed validity checking functionality will considerably reduce the amount of MDC point selection calculations done at the base stations.

Furthermore, in the above preferred embodiment, a fallback scheme of MDC selection on topology information inconsistency (MSTII) may be provided for the following reasons.

Upon selection of an MDC point for a call, the correct RAN topology information is needed. Due to a component congestion or failure, any network component such as link or node might stop its serving function in the RAN and cause a change of RAN topology. The change of the RAN topology will then trigger an update of RAN topology information kept in each node in RAN. The update usually needs a few seconds, called as converging period, to accomplish. During the converging period, the RAN topology information in different nodes is different - this is called as topology information inconsistency. If MDC point selection for a call is done with inconsistent or wrong RAN topology information, its associated MDC relocation will be a wrong MDC relocation and its associated leg addition would be a wrong leg addition. The incorrect MDC relocation and leg addition will add high but meaningless processing and transportation cost to RAN and additionally cause some irregular RAN transportation problems.

The MSTII fallback scheme is therefore adapted to identify the topology information inconsistency problem during its happening and to prevent the wrong MDC relocations and wrong leg additions during the converging period. In particular, the MSTII fallback scheme consists of two sub-schemes, a first sub-scheme for detecting the topology information inconsistency and a second topology inconsistency fallback sub-scheme. The first sub-scheme discovers and indicates the beginning, continuing, and the ending of topology information inconsistency, to the second sub-scheme. The second sub-scheme acts to prevent the wrong MDC relocations and wrong leg additions during the converging period, according to the indications from the first sub-scheme. The first and second sub-schemes may be implemented at an MDC module provided at e.g. a centralized resource managing device or at an individual network node such as an IP BTS. In the present context, the MDC module corresponds to an abstraction of one or more functions that complete the task or tasks related to at least MDC point selection. The MDC module may however also cover the tasks of relocation triggering and/or management of the active BTS set provided for soft handover of a call. This means that the MDC module may recommend to add a BTS into the active BTS set due to a radio-leg-addition request, or recommend to drop a BTS from the active set due to no enough network resources for it.

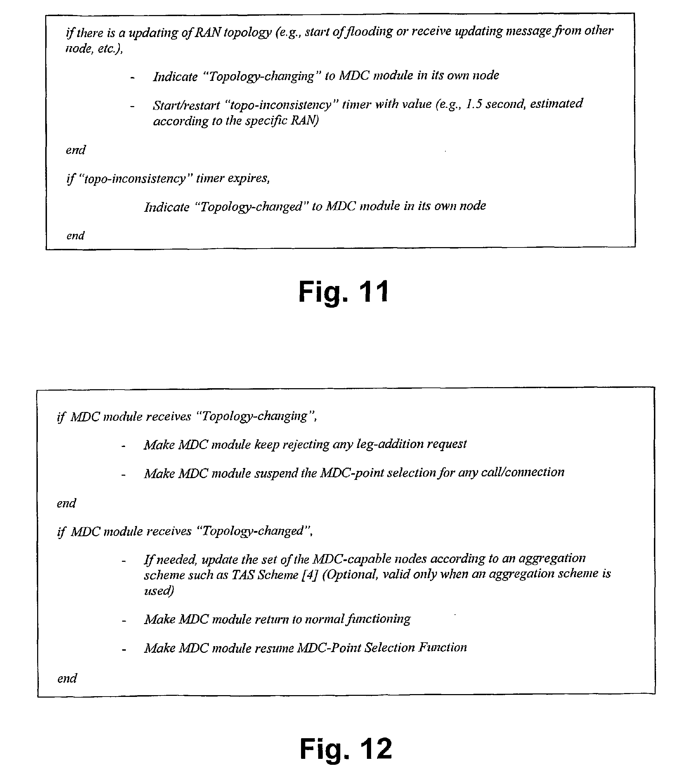

Figs. 11 and 12 show explanatory algorithms for the above first and second sub-scheme, respectively, which may be implemented as hardware units or subroutines continuously running at or for the MDC module before, during and after a topology information inconsistency. The first explanatory sub-scheme of Fig. 11 for detecting a topology information inconsistency may be adapted to work with a link-state routing protocol, e.g. OSPF, or a flooding scheme. If there is an updating of the RAN topology, e.g. a start of flooding or a receipt of an updating message from another node, an actual topology changing process ("Topology-changing") is indicated or signaled to the MDC module provided at the own node and a timer functionality provided at the MDC module is started with a predetermined value, e.g. 1.5 s, which may be estimated based on the specific RAN topology. Then, when the timer has expired, a changed topology ("Topology-changed") is indicated or signaled to the MDC module provided at the own node. The corresponding reaction at the MDC module is defined by the explanatory second sub-scheme shown in Fig. 12. If a topology changing process is indicated to the MDC module, it keeps rejecting any leg-addition request and suspends MDC point selection for any call or connection. Then, if a changed topology is indicated to the MDC module, it may optionally update the set of MDC-capable nodes according to a topology aggregation scheme (TAS), it then returns to normal functioning and resume its MDC point selection function. Thus, wrong leg additions during a topology converging period can be prevented.

The TAS is provided to automatically set the MDC-capable nodes, which may be only a small subset of all nodes in the RAN, for all possible MDC relocations and thus enables a substantial reduction of the associated execution times of MDC relocation procedures for the calls in the RAN, while keeping the benefit of MDC. The MDC-capable nodes are automatically picked up, according to the network topology information available from the routing table, e.g. OSPF, or obtained from an information exchange among the nodes in the RAN. Whenever the RAN topology changes, this scheme will update the subset of MDC-capable nodes according to the new topology. Other nodes, called as leaf nodes which are not in the current MDC-capable subset of the RAN, cannot serve as MDC points for calls.

As an estimation, the TAS may enable a reduction in MDC costs by more than 2/3 and even more than 95%, while maintaining the benefit of MDC.

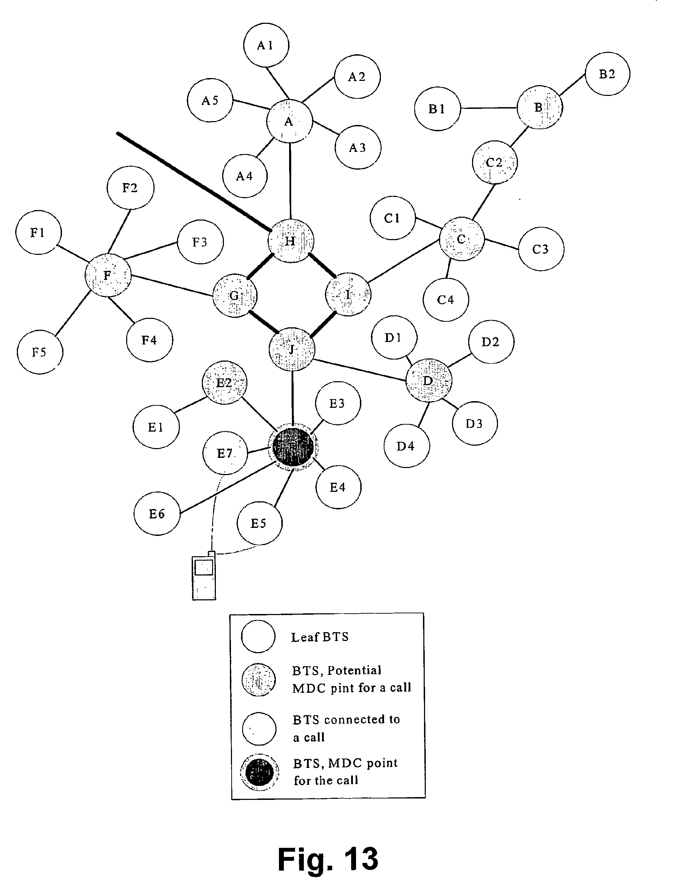

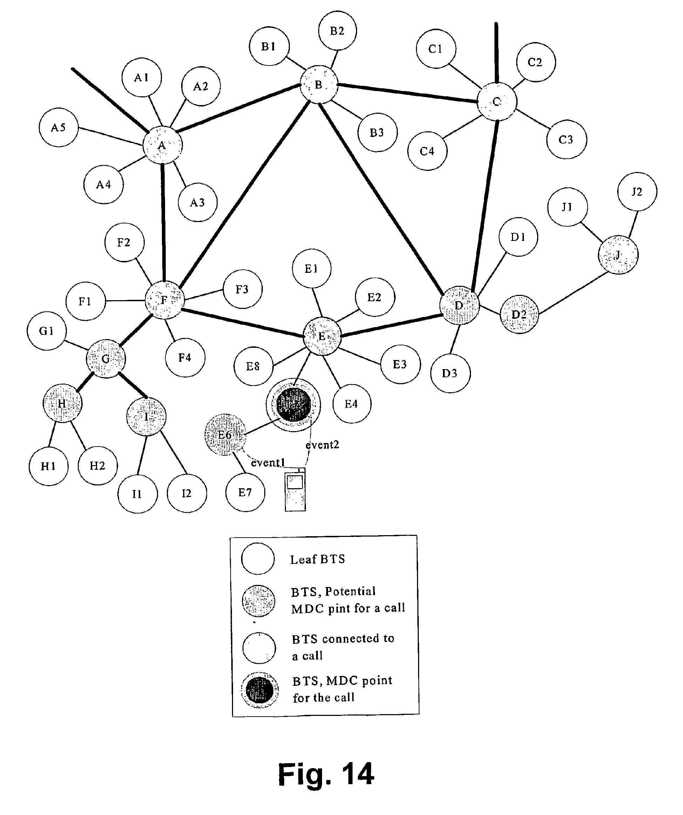

In the following TAS examples are described based on topology examples shown in Figs. 13 and 14. The RAN can be described as an undirected graph $G(N, L)$, where N denotes the set of all nodes or BTSs, e.g. IP routers, in the RAN and N = {N 1, N2, ... Nk}, and L denotes the set of all links of the graph $G(N, L)$. Then, M which is a subset of N, denotes the MDC-capable set of nodes of the RAN. Whenever the RAN topology changes, triggered e.g. by a routing table update, in a node $N_i$ contained in N, M is reset to an empty set. Then, each node $N_j$ having at least two links which connect to other RAN nodes is added to the set M of MDC-capable nodes.

Whenever a call is initiated or a leg is added to or removed from an existing call, the immediate node connected by the initial call (e.g., Node E6 for the call in Fig. 14 when *event2* has not happened yet) at the time of call initiation or, the current MDC point (e.g., Node E5 for the call in Fig. 14) when the call is already initiated, does the following: (1) Call an MDC point selection function (algorithm) to find the suitable MDC point for the call from Set M and (2) Trigger MDC relocation procedure (if the call exists and MDC relocation needed) or trigger MDC installation procedure (if the call is in initiation).

In Fig. 13, a possible topology of an IP RAN is shown under a current consideration for the IP RAN. In the example of Fig. 13, the MDC-capable subset M = (A, B, C, D, E, F, G, H, I, J, C2, E2). When a call is initiated or a leg is added to or removed from an existing call, the suitable MDC point is one of the nodes in M. For the call shown in Fig. 13, the MDC point is located at node E. The number of possible relocations for a given call are calculated as the number of all possible combinations between a current MDC point and its next new MDC point. For example, in the network topology of Fig 13, there are provided 12 MDC-capable nodes and 37 nodes in all. The number of possible relocations is thus 12x11/2 when using TAG and 37x36/2 when not using any topology aggregation. Hence, the number of possible MDC relocations under the above TAS example is 66, i.e. 12x11/2, while the number of possible MDC relocations without TAS would amount to 666, i.e. 37x36/2. Thus, the TAS example leads to a 90% reduction of possible MDC relocations.

Fig. 14 shows a second topology example which may correspond to a future IP RAN network. Again, the MDC-capable subset M = (A, B, C, D, E, F, G, H, I, J, D2, E5, E6). When a call is initiated or a leg is added to or removed from an existing call, the suitable MDC point is one of the nodes in M. For example, the call shown in Fig. 14, when event 2 has happened, the MDC point is relocated to node E5 from node E6. However, the number of possible MDC relocations under the above TAS example is 78, i.e. 13x12/2, while the number of possible MDC relocations without TAS would amount to 946, i.e. 44x43/2. Thus, the TAS example leads to a 91.7% reduction of possible MDC relocations.

It is noted that the present invention is not restricted to the above preferred embodiments, but can be used in any network environment where a plurality of redundant transmission paths are combined at a combining point to a single transmission path. Furthermore, the method is not restricted to the specific selection criteria indicated in the above steps 1 to 4. Any selection criterion suitable for obtaining an appropriate combining point can be used in the priority based selection method. Moreover, the allocation of the priorities may be changed in any manner suitable to obtain a combining point appropriate to a particular application. Thus, the preferred embodiments may vary within the scope of the attached claims.

## Claims

1. A method of selecting a combining point at which at least two redundant transmission paths are combined to a single transmission path in a transmission network comprising at least two selectable combining points (B - J), said method comprising the steps of

a) using at least two measurement-based selection criteria for selecting said combining point;
b) allocating different priorities to said at least two selection criteria; and
c) using the selection result of a selection criterion with a higher priority as a constraint for a selection based on a selection criterion with a lower priority.

2. A method according to claim 1, wherein said at least two selection criteria comprise a selection criterion applied to measured lengths or loads of said at least two redundant transmission paths and/or said single transmission path.

3. A method according to claim 1 or 2, wherein said at least two selection criteria comprise a selection criterion applied to measured processing loads of said selectable combining points.

4. A method according to claim 2 or 3, wherein said at least two selection criteria comprise a first criterion of minimizing the maximum length of said at least two redundant transmission paths, a second criterion of minimizing the maximum total length of said at least two redundant transmission paths and said single transmission paths, a third criterion of minimizing the maximum traffic load on said at least two redundant transmission paths and said single transmission path, and a fourth criterion of minimizing the processing load of said combining point.

5. A method according to claim 4, wherein said maximum length and maximum total length are determined by counting hops of said single and redundant transmission paths, respectively.

6. A method according to claim 4 or 5, further comprising the step of allocating the highest priority to said first criterion, the second highest priority to said second criterion, the third highest priority to said third criterion, and the lowest priority to said fourth criterion.

7. A method according to any one of claims 4 to 6, wherein said third criterion is applied by monitoring and updating real time traffic loads using an averaging function.

8. A method according to claim 7, wherein said averaging function is an exponential averaging function.

9. A method according to any one of the preceding claims, further comprising the step of transmitting load measurement results or load reports mutually between said at least two selectable combining points (B - J) at predetermined intervals.

10. A method according to any one of claims 1 to 8, further comprising the step of transmitting load measurement results from said at least two selectable combining points (B - J) to a centralized resource, which will distribute the load information to all possible combining points (B - J) at predetermined intervals.

11. A method according to any one of claims 1 to 8, further comprising the step of transmitting load reports from said at least two selectable combining points (B - J) directly to all other possible combining points (B - J) at predetermined intervals without any intervention of a centralized resource.

12. A method according to any one of the preceding claims, further comprising the step of setting a maximum load threshold to be considered during said selection of said combining point.

13. A method according to claim 12, wherein said maximum load threshold defines the maximum allowable real time load on used links of said at least two redundant transmission paths and/or the maximum allowable class x load on used links of said single transmission path.

14. A method according to claim 12 or 13, wherein said maximum load threshold defines the maximum allowable processing load in said selected combining point.

15. A method according to any one of the preceding claims, further comprising the step of bypassing a selection criterion if required measurement values are not available.

16. A method according to any one of the preceding claims, further comprising the step of dropping a redundant transmission path from said at least two redundant transmission paths, if said method does not lead to a selection of a combining point.

17. A method according to claim 16, further comprising the step of rejecting a corresponding new call if only one redundant transmission path is left and said method does not lead to a selection of a combining point.

18. A method according to any one of the preceding claims, wherein said selection method is used after a change in the network topology.

19. A method according to any one of the preceding claims, wherein a previously selected combining point is maintained if said current combining point at least still meets said at least two measurement-based selection criteria.

20. A method according to claim 19, wherein at least one stricter selection criterion is applied to said previously selected combining point.

21. A method according to claim 20, wherein said at least one stricter selection criterion corresponds to 90% of a load threshold value applied to said previously selected combining point.

22. A method according to any one of the preceding claims, further comprising the steps of detecting a topology inconsistency, and preventing relocations of said combining point during said detected topology inconsistency.

23. A method according to claim 22, further comprising the steps of starting a timer function in response to said detection step, and allowing relocations after the expiry of said timer function.

24. A method according to any one of the preceding claims wherein a subset of nodes capable of being selected as the combining point in said selection step a) is determined based on the topology of said transmission network.

25. A method according to claim 24, wherein said determination is repeated after a change in the network topology.

26. A method according to claim 24 or 25, wherein said subset of capable nodes is selected based on their number of links connecting to other nodes.

27. A network node for selecting a combining point at which at least two redundant transmission paths are combined to a single transmission path in a transmission network comprising at least two selectable combining points (B - J), said network node being arranged to use at least two measurement-based selection criteria with different priorities for selecting said combining point, and to use the selection result of a higher priority selection criterion as a constraint for a selection based on a lower priority selection criterion.

28. A network node according to claim 27, wherein said combining point is a macro diversity combining point in a radio access network providing access to an IP-based network.

29. A network node according to claim 28, wherein said selectable combining points are base station devices (B - J).

30. A network node according to any one of claims 27 to 29, wherein said network node is a base station device (B - J).

31. A network node according to any one of claims 27 to 29, wherein said network node is a centralized resource managing device.

32. A network node according to any one of claims 27 to 31, further comprising means for detecting a topology information inconsistency, and means for preventing relocations of said combining point during said topology information inconsistency.

33. A network node according to claim 32, wherein said detecting means comprises a timer functionality.

**Patentansprüche**

1. Verfahren zum Auswählen eines Kombinationspunkts, an dem zumindest zwei redundante Übertragungspfade zu einem einzelnen Übertragungspfad in einem Übertragungsnetzwerk kombiniert werden, das zumindest zwei auswählbare Kombinationspunkte (B - J) umfasst, wobei das Verfahren die Schritte umfasst:

a) Nutzen zumindest zweier auf Messungen basierender Auswahlkriterien zum Auswählen des Kombinationspunkts;

b) Zuweisen verschiedener Prioritäten zu den zumindest zwei Auswahlkriterien; und

c) Nutzen des Auswahlergebnisses eines Auswahlkriteriums mit einer höheren Priorität als eine Einschränkung für eine Auswahl basierend auf einem Auswahlkriterium mit einer niedrigeren Priorität.

2. Verfahren gemäß Anspruch 1, wobei die zumindest zwei Auswahlkriterien ein Auswahlkriterium umfassen, das auf gemessene Längen oder Auslastungen der zumindest zwei redundanten Übertragungspfade und/oder des einzelnen Übertragungspfads angewendet wird.

3. Verfahren gemäß Anspruch 1 oder 2, wobei die zumindest zwei Auswahlkriterien ein Auswahlkriterium umfassen, das auf gemessene Verarbeitungsauslastungen der ausgewählten Kombinationspunkte angewendet wird.

4. Verfahren gemäß Anspruch 2 oder 3, wobei die zumindest zwei Auswahlkriterien ein erstes Kriterium zur Minimierung der maximalen Länge der zumindest zwei redundanten Übertragungspfade, ein zweites Kriterium zur Minimierung der maximalen totalen Länge der zumindest zwei redundanten Übertragungspfade und des einzelnen Übertragungspfads, ein drittes Kriterium zur Minimierung der maximalen Verkehrsauslastung auf den zumindest zwei redundanten Übertragungspfaden und dem einzelnen Übertragungspfad, und ein viertes Kriterium zur Minimierung der Verarbeitungsauslastung des Kombinationspunkts umfassen.

5. Verfahren gemäß Anspruch 4, wobei die maximale Länge und die maximale totale Länge durch Zählen von Hops des einzelnen bzw. der redundanten Übertragungspfade bestimmt werden.

6. Verfahren gemäß Anspruch 4 oder 5, des weiteren umfassend den Schritt des Zuweisens der höchsten Priorität zu dem ersten Kriterium, der zweithöchsten Priorität zu dem zweiten Kriterium, der dritthöchsten Priorität zu dem dritten Kriterium, und der niedrigsten Priorität zu dem vierten Kriterium.

7. Verfahren gemäß einem der Ansprüche 4 bis 6, wobei das dritte Kriterium durch Überwachen und Aktualisieren der Echtzeitverkehrsauslastungen unter Nutzung einer Mittelungsfunktion angewendet wird.

8. Verfahren gemäß Anspruch 7, wobei die Mittelungsfunktion eine exponentielle Mittelungsfunktion ist.

9. Verfahren gemäß einem der vorangehenden Ansprüche, weiter umfassend den Schritt des Übertragens von Auslastungsmessergebnissen oder Auslastungsberichten gegenseitig zwischen den zumindest zwei auswählbaren Kombinationspunkten (B - J) in vorbestimmten Intervallen.

10. Verfahren gemäß einem der Ansprüche 1 bis 8, weiter umfassend den Schritt des Übertragens von Auslastungsmessergebnissen von den zumindest zwei auswählbaren Kombinationspunkten (B - J) zu einer zentralisierten Ressource, welche die Auslastungsinformation zu allen möglichen Kombinationspunkten (B - J) in vorbestimmten Intervallen verteilen wird.

11. Verfahren gemäß einem der Ansprüche 1 bis 8, weiter umfassend den Schritt des Übertragens von Auslastungsberichten von den zumindest zwei auswählbaren Kombinationspunkten (B - J) direkt zu allen anderen möglichen Kombinationspunkten (B - J) in vorbestimmten Intervallen ohne Zwischenschalten einer zentralisierte Ressource.

12. Verfahren gemäß einem der vorangehenden Ansprüche, weiter umfassend den Schritt des Festsetzens einer maximalen Auslastungsschwelle, welche während der Auswahl des Kombinationspunkts zu berücksichtigen ist.

13. Verfahren gemäß Anspruch 12, wobei die maximale Auslastungsschwelle die maximal erlaubte Echtzeitauslastung auf genutzten Verbindungen der zumindest zwei redundanten Übertragungspfade und/oder die maximal erlaubbare Auslastung der Klasse x auf genutzten Verbindungen des einzelnen Übertragungspfads definiert.

14. Verfahren gemäß Anspruch 12 oder 13, wobei die maximale Auslastungsschwelle die maximal erlaubte Verarbeitungsauslastung in dem ausgewählten Kombinationspunkt definiert.

15. Verfahren gemäß einem der vorangehenden Ansprüche, weiter umfassend den Schritt des Umgehens eines Auswahlkriteriums, falls nötige Messwerte nicht verfügbar sind.

16. Verfahren gemäß einem der vorangehenden Ansprüche, weiter umfassend den Schritt des Verwerfens eines redundanten Übertragungspfads von den zumindest zwei redundanten Übertragungspfaden, falls das Verfahren nicht zu einer Auswahl eines Kombinationspunkts führt.

17. Verfahren gemäß Anspruch 16, weiter umfassend den Schritt des Ablehnens eines entsprechenden neuen Anrufs, wenn nur ein redundanter Übertragungspfad übrig ist und das Verfahren nicht zu einer Auswahl eines Kombinationspunkts führt.

18. Verfahren gemäß einem der vorangehenden Ansprüche, wobei das Auswahlverfahren nach einer Änderung in der Netzwerktopologie genutzt wird.

19. Verfahren gemäß einem der vorangehenden Ansprüche, wobei ein zuvor ausgewählter Kombinationspunkt beibehalten wird, wenn der gegenwärtige Kombinationspunkt zumindest immer noch wenigstens zwei auf Messungen basierende Auswahlkriterien erfüllt.

20. Verfahren gemäß Anspruch 19, wobei zumindest ein strikteres Auswahlkriterium auf den zuvor ausgewählten Kombinationspunkt angewendet wird.

21. Verfahren gemäß Anspruch 20, wobei das zumindest eine striktere Auswahlkriterium 90% eines Auslastungsschwellwerts entspricht, der auf die vorherigen ausgewählten Kombinationspunkte angewendet wird.

22. Verfahren gemäß einem der vorangehenden Ansprüche, weiter umfassend die Schritte des Erfassens einer Topologieinkonsistenz und des Verhinderns von Neuverteilungen des Kombinationspunkts während der erfassten Topologieinkonsistenz.

23. Verfahren gemäß Anspruch 22, weiter umfassend die Schritte des Startens einer Zeitgeberfunktion im Ansprechen auf den Erfassungsschritt und des Erlaubens von Neuverteilungen nach dem Ablauf der Zeitgeberfunktion.

24. Verfahren gemäß einem der vorangehenden Ansprüche, wobei eine Untergruppe von Knoten ausgewählt wird, die befähigt ist, als Kombinationspunkt in dem Selektionsschritt a) basierend auf der Topologie des Übertragungsnetzwerks bestimmt zu werden.

25. Verfahren gemäß Anspruch 24, wobei das Bestimmen nach einer Änderung in der Netzwerktopologie wiederholt wird.

26. Verfahren gemäß Anspruch 24 oder 25, wobei die Untergruppe der befähigten Knoten basierend auf deren Anzahl von Verbindungen, die mit anderen Knoten verbinden, ausgewählt wird.

27. Netzwerkknoten zum Auswählen eines Kombinationspunkts, an dem zumindest zwei redundante Übertragungspfade zu einem einzelnen Übertragungspfad in einem Übertragungsnetzwerk kombiniert werden, das zumindest zwei auswählbare Kombinationspunkte (B - J) umfasst, wobei der Netzwerkknoten ausgestaltet ist, um zumindest zwei auf Messungen basierende Auswahlkriterien mit verschiedenen Prioritäten zum Auswählen des Kombinationspunkts zu nutzen, und das Auswahlergebnis eines Auswahlkriteriums höherer Priorität als eine Einschränkung für eine Auswahl basierend auf einem Auswahlkriterium niedrigerer Priorität zu nutzen.

28. Netzwerkknoten gemäß Anspruch 27, wobei der Kombinationspunkt ein Makrodiversitätskombinationspunkt in einem Funkzugangsnetzwerk ist, welches Zugang zu einem IP-basierten Netzwerk bereitstellt.

29. Netzwerkknoten gemäß Anspruch 28, wobei die auswählbaren Kombinationspunkte Basisstationsgeräte sind (B - J).

30. Netzwerkknoten gemäß einem der Ansprüche 27 bis 29, wobei der Netzwerkknoten ein Basisstationsgerät (B - J) ist.

31. Netzwerkknoten gemäß einem der Ansprüche 27 bis 29, wobei der Netzwerkknoten ein zentralisiertes Ressourcenverwaltungsgerät ist.

32. Netzwerkknoten gemäß einem der Ansprüche 27 bis 31, weiter umfassend eine Einrichtung zum Erfassen einer Topologieinformationsinkonsistenz und eine Einrichtung zum Verhindern von Neuverteilungen des Kombinationspunkts während der Topologieinformationsinkonsistenz.

**33.** Netzwerkknoten gemäß Anspruch 32, wobei die Erfassungseinrichtung eine Zeitgeberfunktionalität umfasst.

## Revendications

**1.** Procédé de sélection d'un point de combinaison auquel au moins deux chemins de transmission redondants sont combinés dans un chemin de transmission unique dans un réseau de transmission comprenant au moins deux points de combinaison sélectionnables (B-J), ledit procédé comprenant les étapes consistant à

a) utiliser au moins deux critères de sélection à base de mesure pour sélectionner ledit point de combinaison ;
b) allouer différentes priorités auxdits au moins deux critères de sélection ; et
c) utiliser le résultat de sélection d'un critère de sélection ayant une priorité plus élevée en tant que contrainte pour une sélection basée sur un critère de sélection ayant une priorité plus faible.

**2.** Procédé selon la revendication 1, dans lequel lesdits au moins deux critères de sélection comprennent un critère de sélection appliqué aux longueurs ou charges mesurées desdits au moins deux chemins de transmission redondants et/ou dudit chemin de transmission unique.

**3.** Procédé selon la revendication 1 ou 2, dans lequel lesdits au moins deux critères de sélection comprennent un critère de sélection appliqué pour mesurer des charges de traitement desdits points de combinaison sélectionnables.

**4.** Procédé selon la revendication 2 ou 3, dans lequel lesdits au moins deux critères de sélection comprennent un premier critère de réduction au minimum de la longueur maximale desdits au moins deux chemins de transmission redondants, un deuxième critère de réduction au minimum de la longueur totale maximale desdits au moins deux chemins de transmission redondants et desdits chemins de transmission uniques, un troisième critère de réduction au minimum de la charge de trafic maximale sur lesdits au moins deux chemins de transmission redondants et ledit chemin de transmission unique, et un quatrième critère de réduction au minimum de la charge de traitement dudit point de combinaison.

**5.** Procédé selon la revendication 4, dans lequel lesdites longueur maximale et longueur totale maximale sont déterminées en comptant les bonds desdits chemins de transmission unique et redondants, respectivement.

**6.** Procédé selon la revendication 4 ou 5, comprenant en outre l'étape consistant à allouer la plus haute priorité audit premier critère, la deuxième plus haute priorité audit deuxième critère, la troisième plus haute priorité audit troisième critère, et la plus basse priorité audit quatrième critère.

**7.** Procédé selon l'une quelconque des revendications 4 à 6, dans lequel ledit troisième critère est appliqué en surveillant et en mettant à jour les charges de trafic en temps réel en utilisant une fonction de calcul de moyenne.

**8.** Procédé selon la revendication 7, dans lequel ladite fonction de calcul de moyenne est une fonction de calcul de moyenne exponentielle.

**9.** Procédé selon l'une quelconque des revendications précédentes, comprenant en outre l'étape consistant à transmettre des résultats de mesure de charge ou des rapports de charge mutuellement entre lesdits au moins deux points de combinaison sélectionnables (B-J) à des intervalles prédéterminés.

**10.** Procédé selon l'une quelconque des revendications 1 à 8, comprenant en outre l'étape consistant à transmettre des résultats de mesure de charge desdits au moins deux points de combinaison sélectionnables (B-J) à une ressource centralisée, qui distribue les informations de charge à tous les points de combinaison (B-J) possibles à des intervalles prédéterminés.

**11.** Procédé selon l'une quelconque des revendications 1 à 8, comprenant en outre l'étape consistant à transmettre des rapports de charge desdits au moins deux points de combinaison sélectionnables (B-J) directement à tous les autres points de combinaison (B-J) possibles à des intervalles prédéterminés sans aucune intervention d'une ressource centralisée.

**12.** Procédé selon l'une quelconque des revendications précédentes, comprenant en outre l'étape consistant à définir un seuil de charge maximal à prendre en compte durant ladite sélection dudit point de combinaison.

**13.** Procédé selon la revendication 12, dans lequel ledit seuil de charge maximal définit la charge en temps réel maximale tolérée sur les liaisons utilisées desdits au moins deux chemins de transmission redondants et/ou la classe x charge maximale tolérée sur les liaisons utilisées dudit chemin de transmission unique.

**14.** Procédé selon la revendication 12 ou 13, dans lequel ledit seuil de charge maximal définit la charge de traitement maximale tolérée dans ledit point de combinaison sélectionné.

**15.** Procédé selon l'une quelconque des revendications précédentes, comprenant en outre l'étape consistant à ignorer un critère de sélection si des valeurs de mesure requises ne sont pas disponibles.

**16.** Procédé selon l'une quelconque des revendications précédentes, comprenant en outre l'étape consistant à éliminer un chemin de transmission redondant desdits au moins deux chemins de transmission redondants, si ledit procédé ne conduit pas à une sélection d'un point de combinaison.

**17.** Procédé selon la revendication 16, comprenant en outre l'étape consistant à rejeter un nouvel appel correspondant s'il reste un seul chemin de transmission redondant et ledit procédé ne conduit pas à une sélection d'un point de combinaison.

**18.** Procédé selon l'une quelconque des revendications précédentes, dans lequel ledit procédé de sélection est utilisé après un changement de la topologie de réseau.

**19.** Procédé selon l'une quelconque des revendications précédentes, dans lequel un point de combinaison précédemment sélectionné est maintenu si ledit point de combinaison actuel satisfait encore à au moins deux desdits critères de sélection à base de mesure.

**20.** Procédé selon la revendication 19, dans lequel au moins un critère de sélection plus strict est appliqué audit point de combinaison précédemment sélectionné.

**21.** Procédé selon la revendication 20, dans lequel ledit au moins un critère de sélection plus strict correspond à 90 % d'une valeur de seuil de charge appliquée audit point de combinaison précédemment sélectionné.

**22.** Procédé selon l'une quelconque des revendications précédentes, comprenant en outre les étapes consistant à détecter une incohérence de topologie, et prévenir les relocalisations dudit point de combinaison durant ladite incohérence de topologie détectée.

**23.** Procédé selon la revendication 22, comprenant en outre les étapes consistant à démarrer une fonction de minuteur en réponse à ladite étape de détection, et autoriser les relocalisations après l'expiration de ladite fonction de minuteur.

**24.** Procédé selon l'une quelconque des revendications précédentes, dans lequel un sous-ensemble de noeuds pouvant être sélectionnés en tant que point de combinaison dans ladite étape de sélection a) est déterminé sur la base de la topologie dudit réseau de transmission.

**25.** Procédé selon la revendication 24, dans lequel ladite détermination est répétée après un changement de la topologie de réseau.

**26.** Procédé selon la revendication 24 ou 25, dans lequel ledit sous-ensemble de noeuds potentiels est sélectionné sur la base du nombre de liaisons connectant à d'autres noeuds.

**27.** Noeud de réseau pour sélectionner un point de combinaison auquel au moins deux chemins de transmission redondants sont combinés dans un chemin de transmission unique dans un réseau de transmission comprenant au moins deux points de combinaison sélectionnables (B-J), ledit noeud de réseau étant agencé pour utiliser au moins deux critères de sélection à base de mesure avec différentes priorités pour sélectionner ledit point de combinaison, et utiliser le résultat de sélection d'un critère de sélection ayant une priorité plus élevée en tant que contrainte pour une sélection basée sur un critère de sélection ayant une priorité plus faible.

**28.** Noeud de réseau selon la revendication 27, dans lequel ledit point de combinaison est un point de combinaison de macrodiversité dans un réseau d'accès sans fil permettant d'accéder à un réseau IP.

**29.** Noeud de réseau selon la revendication 28, dans lequel lesdits points de combinaison sélectionnables sont des dispositifs de station de base (B-J).

**30.** Noeud de réseau selon l'une quelconque des revendications 27 à 29, dans lequel ledit noeud de réseau est un dispositif de station de base (B-J).

**31.** Noeud de réseau selon l'une quelconque des revendications 27 à 29, dans lequel ledit noeud de réseau est un dispositif de gestion de ressource centralisée.

**32.** Noeud de réseau selon l'une quelconque des revendications 27 à 31, comprenant en outre des moyens pour détecter une incohérence d'informations de topologie, et des moyens pour prévenir les relocalisations dudit point de combinaison durant ladite incohérence d'informations de topologie.

**33.** Noeud de réseau selon la revendication 32, dans lequel lesdits moyens de détection comprennent une fonctionnalité de minuteur.

# Fig. 1

# Fig. 2

```
mdc_hop_count_min = 100  (or some other initialization)
for i = 1 to N
    if (mdc_load_CANDIDATE(i) < mdc_threshold AND max_rt_load_CANDIDATE(i) ≤ rt_threshold
        AND max_x_load_CANDIDATE(i) ≤ x_threshold)
      mdc_hop_count_max(i) = hop_count_CANDIDATE(i)->SERVING_BTS
      for j = 1 to M
          if (mdc_hop_count_CANDIDATE(i)->DRIFT_BTS(j) > mdc_hop_count_max(i))
              mdc_hop_count_max(i) = hop_count_CANDIDATE(i)->DRIFT_BTS(j)
      if (mdc_hop_count_max(i) ≤ mdc_hop_count_min)
          mdc_hop_count_min = mdc_hop_count_max(i)
      else
          drop candidate i from the MDC point candidate list
    else
        drop candidate i from the MDC point candidate list
for i = 1 to N (excluding already dropped candidates)
    if (mdc_hop_count_max(i) > mdc_hop_count_min)
        drop candidate i from the MDC point candidate list
```

## Fig. 3

```
hop_count_min = 100  (or some other initialization)
for i = 1 to N (excluding already dropped candidates)
    hop_count_CANDIDATE(i) = hop_count_RNGW->CANDIDATE(i) + hop_count_CANDIDATE(i)->SERVING_BTS
    for i = 1 to M
        hop_count_CANDIDATE(i) = hop_count_CANDIDATE(i)->DRIFT_BTS(j)
    if (hop_count_CANDIDATE(i) ≤ hop_count_min)
        hop_count_min = hop_count_CANDIDATE(i)
    else
        drop candidate i from the MDC point candidate list
for i = 1 to N (excluding already dropped candidates)
    if (hop_count_CANDIDATE(i) > hop_count_min)
        drop candidate i from the MDC point candidate list
```

## Fig. 4

```
max_rt_load_min = 1 (or some other initialization)
for i = 1 to N (excluding already dropped candidates)
    max_rt_load_CANDIDATE(i) = max(max_rt_load_RNGW->CANDIDATE(i), max_rt_load_CANDIDATE(i)->RNGW,
        max_rt_load_CANDIDATE(i)->SERVING_BTS, max_rt_load_SERVING_BTS->CANDIDATE(i))
    for i = 1 to N
        max_rt_load_CANDIDATE(i) = max(max_rt_load_CANDIDATE(i),
            max_rt_load_CANDIDATE(i)->DRIFT_BTS(j), max_rt_load_DRIFT_BTS(j)->CANDIDATE(i))
    if (max_rt_load_CANDIDATE(i) ≤ max_rt_load_min)
        max_rt_load_min = max_rt_load_CANDIDATE(i)
    else
        drop candidate i from the MDC point candidate list
for i = 1 to N (excluding already dropped candidates)
    if (max_rt_load_CANDIDATE(i) > max_rt_load_min)
        drop candidate i from the MDC point candidate list
```

# Fig. 5

```
mdc_load_min = 1 (or some other initialization)
for i = 1 to N (excluding already dropped candidates)
    if (mdc_load_CANDIDATE(i) < mdc_load_min)
        mdc_load_min = mdc_load_CANDIDATE(i)
    else
        drop candidate i from the MDC point candidate list
for i = 1 to N (excluding already dropped candidates)
    if (mdc_load_CANDIDATE(i) > mdc_load_min)
        drop candidate i from the MDC point candidate list
```

# Fig. 6

| Node | MDC load (%) | Real time traffic loads (% of link capacity) towards neighbor nodes (maximum allowed RT traffic load: 80%) | | | | | | | | | |
| --- | --- | --- | --- | --- | --- | --- | --- | --- | --- | --- | --- |
| | | A | B | C | D | E | F | G | H | I | J |
| A | 75 | - | 50 | - | - | - | - | - | - | - | 30 |
| B | 70 | 25 | - | 60 | - | - | 40 | - | - | - | - |
| C | 65 | - | 30 | - | 30 | 40 | - | - | - | - | - |
| D | 60 | - | - | 15 | - | - | - | - | - | - | - |
| E | 45 | - | - | 20 | - | - | - | - | - | - | - |
| F | 55 | - | 20 | - | - | - | - | 50 | - | - | 20 |
| G | 65 | - | - | - | - | - | 25 | - | 40 | 30 | - |
| H | 40 | - | - | - | - | - | - | 20 | - | - | - |
| I | 75 | - | - | - | - | - | - | 15 | - | - | - |
| J | 60 | 15 | - | - | - | - | 10 | - | - | - | - |

# Fig. 7

```
if (new connection)
   calculate the optimal MDC point
else
   if (initial [or stricter] constraints of the MDC point selection
       scheme met)
     continue using the current MDC point
   else
     calculate the optimal MDC point
```

# Fig. 8

New call arrives to
serving IP BTS (no
current MDC point).

Minimize re-
locations and
constraints
met?

No

Yes

The set of IP BTSs
changes (leg addition or
leg removal).

Step 0: Check the
contraints with the old
MDC point.

Continue with the old MDC
point.

Step 1: Minimize the
maximum MDC leg
length.

Remaining processing of Fig. 2
including steps 2 to 4

# Fig. 9

```
if (new connection)
    calculate the optimal MDC point
else
    if (max_rt_load_{Current\_MDC\_Point} \leq 0.9*rt\_threshold)
        continue using the current MDC point
    else
        calculate the optimal MDC point
```

# Fig. 10

---

*if there is a updating of RAN topology (e.g., start of flooding or receive updating message from other node, etc.),*

- *Indicate "Topology-changing" to MDC module in its own node*

- *Start/restart "topo-inconsistency" timer with value (e.g., 1.5 second, estimated according to the specific RAN)*

*end*

*if "topo-inconsistency" timer expires,*

   *Indicate "Topology-changed" to MDC module in its own node*

*end*

---

# Fig. 11

---

*if MDC module receives "Topology-changing",*

- *Make MDC module keep rejecting any leg-addition request*

- *Make MDC module suspend the MDC-point selection for any call/connection*

*end*

*if MDC module receives "Topology-changed",*

- *If needed, update the set of the MDC-capable nodes according to an aggregation scheme such as TAS Scheme [4] (Optional, valid only when an aggregation scheme is used)*

- *Make MDC module return to normal functioning*

- *Make MDC module resume MDC-Point Selection Function*

*end*

---

# Fig. 12

Leaf BTS

BTS, Potential
MDC pint for a call

BTS connected to
a call

BTS, MDC point
for the call

## Fig. 13

**Fig. 14**

**EP 1 506 682 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6198737 B1